# EUROPEAN PATENT SPECIFICATION

(11) **EP 4 300 647 B1**
(45) Date of publication and mention of the grant of the patent: **28.10.2026**
(21) Application number: 22878776.8
(22) Date of filing: 22.09.2022
(51) Int. Cl.: H01M 10/04, H01M 10/0583, H01M 50/466

(54) **ELECTRODE ASSEMBLY AND BATTERY CELL INCLUDING THE SAME**
ELEKTRODENANORDNUNG UND BATTERIEZELLE DAMIT
ENSEMBLE ÉLECTRODE ET ÉLÉMENT DE BATTERIE LE COMPRENANT

(30) Priority: 07.10.2021 KR 20210133372; 19.09.2022 KR 20220117985
(43) Date of publication of application: 03.01.2024
(73) Proprietor: LG Energy Solution, Ltd., Seoul 07335 (KR)
(72) Inventor: JANG, Seokhoon, Daejeon 34122 (KR); JEONG, Hyeok, Daejeon 34122 (KR); JUNG, Su Taek, Daejeon 34122 (KR); KWON, Soon Kwan, Daejeon 34122 (KR); LEE, Byeong Kyu, Daejeon 34122 (KR)
(74) Representative: Plasseraud IP
(86) International application number: PCT/KR2022/014176
(87) International publication number: WO 2023/058955

(56) References cited:
- WO-A1-2021/187726
- JP-A- 2015 215 988
- JP-A- 2016 105 360
- KR-A- 20190 065 138
- KR-B1- 102 164 003
- KR-B1- 102 205 425
- US-A1- 2020 243 895
- US-A1- 2023 010 746

## Description

### [TECHNICAL FIELD]

### Cross Citation with Related Application(s)

This application claims the benefit of Korean Patent Application No. 10-2021-0133372 filed on October 7, 2021 and Korean Patent Application No. 10-2022-0117985 filed on September 19, 2022 in the Korean Intellectual Property Office.

The present disclosure relates to an electrode assembly and a battery cell including the same. More particularly, the present disclosure relates to an electrode assembly in which electrodes and separator sheets are alternately stacked in a Z-folding type, and a battery cell including the same, and to an electrode assembly which prevents the electrode from being separated from a prescribed position and also has improved stiffness even though the adhesive strength of the separator sheet itself is low, and a battery cell including the same.

### [BACKGROUND]

Generally, the types of secondary batteries include nickel-cadmium batteries, nickel-hydrogen batteries, lithium-ion batteries, lithium-ion polymer batteries, and the like. Such secondary batteries are applied and used not only to small-sized products such as digital cameras, P-DVD, MP3P, cellular phones, PDA, portable game devices, power tools and E-bikes, but also to large-sized products demanding high output such as electric and hybrid vehicles, and a power storage device for storing surplus generated power or new renewable energy and a backup power storage device.

In order to manufacture such a secondary battery, first, the electrode active material slurry is applied to a cathode current collector and an anode current collector to manufacture a cathode and an anode, which are stacked on both sides of the separator, thereby forming an electrode assembly having a predetermined shape. Then, the electrode assembly is housed in a battery case, and the electrolytic solution is injected and then sealed.

Electrode assemblies are classified into various types. For example, there may be mentioned a simple stack type in which cathodes, separators, and anodes simply cross with each other and they are continuously stacked without manufacturing a unit cell, a lamination & stack type (L&S, lamination & stack type) in which unit cells are first manufactured using cathodes, separators, and anodes, and then these unit cells are stacked, a stack & folding type (S&F, stack & folding type) in which a plurality of unit cells are spaced apart and attached to one surface of a separator sheet having a long length, and the separator sheet is repeatedly folded in the same direction from one end, a Z-folding type in which a plurality of electrodes or unit cells are alternately attached to one surface and the other surface of a separator sheet whose length is long on one side, and the method of folding the separator sheet in a specific direction from one end and then folding it in the opposite direction are alternately repeated, and the like. Among them, the Z-folding type has high alignment degree and impregnation degree of the electrolytic solution, and thus is often used in recent years.

By the way, in a conventional case, after the electrode and the separator sheet are stacked in this Z-folding type, a separate staking process is not performed and thus, the electrode and the separator sheet do not adhere to each other, which causes a problem that the electrode is separated from a prescribed position and the stiffness of the electrode assembly is deteriorated. To solve these problems, a separate stacking process was performed after stacking the electrode and the separator sheet, but the overall thickness of the stack in which the electrode and the separator sheet are stacked is thickened, which causes a problem that heat is not transferred to the inside of the stack, and thus the adhesive strength is reduced. Such problems tended to become serious depending on the material of the separator sheet. For example, when the adhesive strength of the separator sheet itself is low, the above-mentioned problems become mor serious. US20200243895 discloses a secondary battery and US20230010746A1 discloses an electrode assembly.

Therefore, there is a need to develop a battery cell comprising a Z-folding type electrode assembly which prevents the electrode from being separated from a prescribed position and also has improved stiffness even though the adhesive strength of the separator sheet itself is low

### [DETAILED DESCRIPTION OF THE INVENTION]

### [Technical Problem]

It is an object of the present disclosure to provide an electrode assembly in which electrodes and separator sheets are alternately stacked in a Z-folding type, and a battery cell including the same, and an electrode assembly which prevents the electrode from being separated from a prescribed position and also has improved stiffness even though the adhesive strength of the separator sheet itself is low, and a battery cell including the same.

The objects of the present disclosure are not limited to the aforementioned objects, and other objects which are not mentioned herein should be clearly understood by those skilled in the art from the following detailed description and the accompanying drawings.

### [Technical Solution]

The present invention is defined by the appended set of claims. According to one embodiment of the present disclosure, there is provided an electrode assembly in which electrodes and separator sheets are alternately stacked in a Z-folding type, wherein the electrode includes a first electrode and a second electrode, wherein the separator sheet has a zigzag shape formed by being folded at least twice, wherein a length of the second electrode is smaller than a length of the first electrode, and wherein an adhesive member is located between either one of both side surfaces of the electrode assembly and the second electrode.

The adhesive member is located between a separator sheet which comes into contact with an upper surface of the second electrode and a separator sheet which comes into contact with a lower surface of the second electrode, and the adhesive member is located between a side surface opposite to the side surface wrapped by the separator sheet among both side surfaces of the second electrode, and an outer side surface of the electrode assembly.

The first electrode and the second electrode may be aligned so that the side surface opposite to the side surface wrapped by the separator sheet among both side surfaces of the first electrode, and the side surface wrapped by the separator sheet among both side surfaces of the second electrode may be biased to one side surface among the outer side surfaces of the electrode assembly.

One side surface facing one end of the second electrode among both side surfaces of the adhesive member may be spaced apart from the second electrode.

The side surface opposite to the side surface facing one end of the second electrode among both side surfaces of the adhesive member may be arranged side by side with the outer side surface of the electrode assembly.

The side surface wrapped by the separator sheet among both side surfaces of the second electrode may come into contact with the separator sheet, and the side surface wrapped by the separator sheet among both side surfaces of the first electrode may come into contact with the separator sheet.

A side surface opposite to the side surface wrapped the separator sheet among both side surfaces of the first electrode may be located on the same vertical line as the outer side surface of the electrode assembly.

An adhesive strength between the electrode and the separator sheet may be 0 N/m (0 gf/mm) or more and 0.49 N/m (0.05 gf/mm) or less.

One end of the separator sheet may extend along the outer surface of the electrode assembly.

One end of the separator sheet may wrap around the entire outer surface of the electrode assembly.

The electrode assembly may further comprise a wrapping member that wraps the outer surface of the electrode assembly.

The wrapping member includes a first wrapping member and a second wrapping member, the first wrapping member wraps around a portion of the outer surface of the electrode assembly where the side surface opposite to the side surface wrapped by the separator sheet among both side surfaces of the first electrode is located, and the second wrapping member wraps around a portion of the outer surface of the electrode assembly where the side surface opposite to one side surface facing one end of the second electrode among both side surfaces of the adhesive member is located.

The first wrapping member extends along one of the upper surface and the lower surface of the electrode assembly, and the second wrapping member extends along the other of the upper surface and the lower surface of the electrode assembly.

The wrapping member may be made of at least one of a hot-melt film and an adhesive tape.

According to yet another embodiment of the present disclosure, there is provided a battery cell comprising the above-mentioned electrode assembly.

### [Advantageous Effects]

According to embodiments, the present disclosure provides an electrode assembly in which electrodes and separator sheets are alternately stacked in a Z-folding type, and an adhesive member is located between the electrode located between the separator sheets and the outer surface of the electrode assembly, so that the electrode assembly prevents the electrodes from being separated from a prescribed position, and has improved stiffness even if the adhesive strength of the separator sheet itself is low, and a battery cell comprising the same.

The effects of the present disclosure are not limited to the effects mentioned above and additional other effects not described above will be clearly understood from the detailed description and the appended drawings by those skilled in the art.

### [BRIEF DESCRIPTION OF THE DRAWINGS]

Fig. 1 is a diagram showing a final electrode assembly according to one embodiment of the present disclosure;
Fig. 2 is a cross-sectional view of the electrode assembly taken along the A-A' axis of Fig. 1;
Figs. 3 and 4 are cross-sectional views of an electrode assembly according to another embodiment of the present disclosure;
Fig. 5 is a cross-sectional view of an electrode assembly according to a comparative example; and
Fig. 6 is a diagram showing an experimental example of measuring the stiffness of an electrode assembly.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggeratedly illustrated.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

Hereinafter, an electrode assembly according to one embodiment of the present disclosure will be described. However, a partial cross-section of the electrode assembly is mainly described, but is not necessarily limited thereto and other cross-sections may also be described in the same or similar manner.

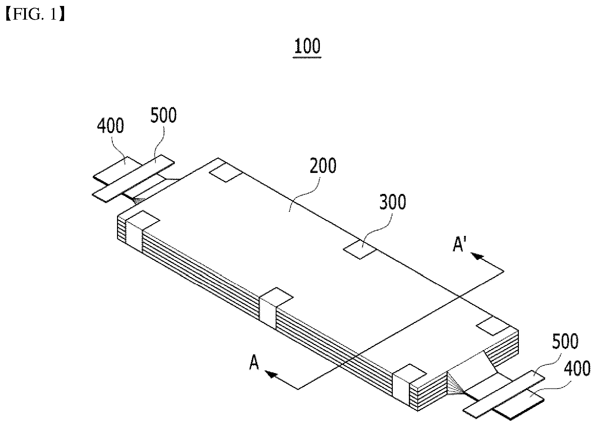

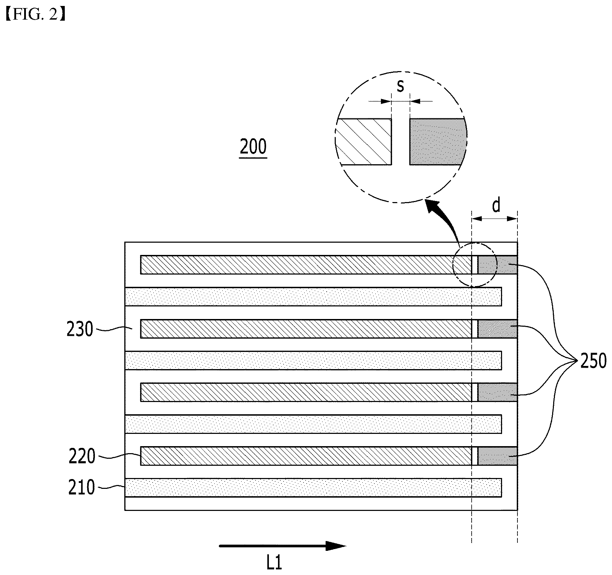

Fig. 1 is a diagram showing a final electrode assembly according to one embodiment of the present disclosure. Fig. 2 is a cross-sectional view of the electrode assembly taken along the A-A' axis of Fig. 1.

Referring to Figs. 1 and 2, an electrode assembly 100 according to the present disclosure may mean a structure in which a fixing tape 300 is attached to the outer surface of the electrode assembly 200. Accordingly, the final electrode assembly 100 can maintain a stacked alignment state between a first electrode 210, a second electrode 220, and a separator sheet 230 included in an electrode assembly 200. However, the present disclosure is not limited thereto, and the fixing tape 300 is omitted from the final electrode assembly 100 or is replaced with another member, thereby capable of maintaining the stacked alignment state between the first electrode 210, the second electrode 220 and the separator sheet 230.

Further, the final electrode assembly 100 may include a plurality of first electrodes 210 included in the electrode assembly 200 and an electrode lead 400 to which electrode tabs extending from the plurality of second electrodes 220 are joined. In one example, as shown in Fig. 1, the electrode leads 400 may extend to both ends of the electrode assembly 200, respectively, and the electrode lead 400 may be divided into a cathode lead or an anode lead according to polarities of the first electrode 210 and the second electrode 220. However, the position of the electrode lead 400 is not limited thereto, and differently from Fig. 1, it may extend together with one end of the electrode assembly 200.

Further, the final electrode assembly 100 may include a lead film 500 located in upper and lower parts of the electrode lead 400. Here, as the final electrode assembly 100 is mounted to a battery case (not shown), the lead film 500 can be sealed by a sealing part (not shown) along with the outer periphery of the battery case (not shown).

Referring to Figs. 1 and 2, the electrode assembly 200 according to one embodiment of the present disclosure may be an electrode assembly in which electrodes 210 and 220 and separator sheets 230 are alternately stacked.

The electrodes 210 and 220 may include a first electrode 210 and a second electrode 220. Here, the first electrode 210 and the second electrode 220 may include electrode active materials having different polarities. That is, the first electrode 210 and the second electrode 220 may be electrodes having different polarities. In one example, if the first electrode 210 is a cathode, the second electrode 220 may be an anode. In another example, if the first electrode 210 is an anode, the second electrode 220 may be a cathode.

Further, the length of the second electrode 220 may be smaller than the length of the first electrode 210. In other words, the length of the first electrode 210 may be larger than the length of the second electrode 220. As shown in Fig. 2, the first electrode 210 and the second electrode 220 have different lengths along the first longitudinal direction L1, and thus, there may be a length difference between the first electrode 210 and the second electrode 220. Accordingly, a tolerance d may be formed between the second electrode 220 and the outer surface of the electrode assembly 200. Here, the first longitudinal direction L1 may be a height direction or a length direction of the electrode assembly 200.

The separator sheet 230 may have a zigzag shape formed by being folded at least twice. More specifically, as shown in Fig. 2, the separator sheet 230 may be folded in a direction covering the first electrode 210 in a state in which the first electrode 210 is stacked. Also, in a state where the second electrode 220 is stacked on the separator sheet 230 covering the first electrode 210, it may be folded in a direction to cover the second electrode 220. Thereafter, in a state in which the first electrode 210 is stacked on the separator sheet 230 covering the second electrode 220, it may be folded in a direction to cover the first electrode 210. That is, the electrode assembly 200 can be formed by repeatedly performing stacking of the first electrode 210 or the second electrode 220 and folding of the separator sheet 230.

Referring to Fig. 2, the first electrode 210 and the second electrode 220 may be aligned so that the side surface opposite to the side surface wrapped by the separator sheet 230 among both side surfaces of the first electrode 210, and the side surface wrapped by the separator sheet 230 among both side surfaces of the second electrode 220 are biased to one side surface among the outer side surfaces of the electrode assembly 200. **In** other words, within the zigzag structure formed by folding the separator sheet 230, one end of the first electrode 210 and one end of the second electrode 220 may be aligned so as to be biased to one side surface of the electrode assembly 200. That is, in the electrode assembly 200 according to the present embodiment, the first electrode 210 and the second electrode 220 may not be aligned on the basis of the center of the electrode assembly 200, but may be aligned on the basis of one side surface of the electrode assembly 200.

Accordingly, in the present embodiment, while preventing the second electrode 220 from being distorted within the separator sheet 230, the area of the adhesive member 250 located between the second electrode 220 and the outer surface of the electrode assembly 200, which will be described later, may be larger.

Further, the side surface wrapped by the separator sheet 230 among both side surfaces of the second electrode 220 comes into contact with the separator sheet 230, and the side surface wrapped by the separator sheet among both side surfaces of the first electrode 210 may come into contact with the separator sheet 230. Here, "the separator sheet comes into contact with the first electrode 210 or the first electrode 220" may mean that the separator sheet 230 extends along the side surface of the first electrode 210 or the second electrode 220, or the separator sheet 230 wraps around the side surface of the first electrode 210 or the second electrode 220.

Thereby, in the present embodiment, it is possible to more effectively prevent the first electrode 210 and the second electrode 220 from being distorted within the separator sheet 230.

Further, a side surface opposite to the side surface wrapped by the separator sheet 230 among both side surfaces of the first electrode 210 may be located on the same vertical line as the outer side surface of the electrode assembly 200. In other words, the side surface opposite to the side surface wrapped by the separator sheet 230 among both side surfaces of the first electrode 210 may protrude toward the outer side surface of the electrode assembly 200 or may not be recessed.

Thereby, in the present embodiment, it is possible to prevent the separator sheet 230 located in an upper part of the first electrode 210 and the separator sheet 230 located in a lower part of the first electrode 210 from being folded during the process.

Referring to Fig. 2, the adhesive member 250 is located between the second electrode 220 and the outer surface of the electrode assembly 200. In other words, the adhesive member 250 may be located within a tolerance d between the second electrode 220 and the outer surface of the electrode assembly 200. More specifically, the adhesive member 250 may be located between the separator sheet 230 which comes into contact with the upper surface of the second electrode 220 and the separator sheet 230 which comes into contact with the lower surface of the second electrode 220. In addition, the adhesive member 250 may be located between the side surface opposite to the side surface wrapped by the separator sheet 230 among both side surfaces of the second electrode 220 and the outer side surface of the electrode assembly 200.

Thereby, in the present embodiment, the adhesive member 250 is located in a space formed between the second electrode 220 and the outer surface of the electrode assembly 200, and thus has a structure that improves space efficiency and supplements the adhesive strength between the electrodes 210 and 220 and the separator 230, which can thus improve the stiffness of the electrode assembly 200.

In addition, one side surface facing the second electrode 220 and one end thereof among both side surfaces of the adhesive member 250 may be spaced apart from the second electrode 220. In other words, a side surface adjacent to the second electrode 220 among both side surfaces of the adhesive member 250 may not come into contact with the second electrode 220.

Thereby, in the present embodiment, the adhesive member 250 does not come into contact with the second electrode 220, which can thus prevent an adhesive material included in the adhesive member 250 from interfering with the movement path of lithium ions formed between the first electrode 210 and the second electrode 220. At this time, the second electrode 220 may be a cathode, and the movement of lithium ions can be determined by the position of the cathode, which is generally smaller in size than the anode. Here, the separation distance s between one end of the second electrode 220 and one side surface of the adhesive member 250 facing each other may be at least 0.5 mm or more, preferably 0.6 mm or more, and more preferably 1 mm or more. This is because in one method of forming the adhesive member 250, the line width of the adhesive applied by a dispenser is about 0.4 to 0.6 mm level. When such conditions are satisfied, the adhesive may be applied without the adhesive member 250 interfering with the cathode side. In addition, since the adhesive may be a contaminant, it is necessary to avoid applying too much.

Further, a side surface opposite to one side facing one end of the second electrode 220 among both side surfaces of the adhesive member 250 may be aligned side by side with the outer side surface of the electrode assembly 200. In other words, a side surface opposite to one side surface facing one end of the second electrode 220 among both side surfaces of the adhesive member 250 may protrude or may not be recessed on the basis of the outer surface of the electrode assembly 200.

Thus, according to the present embodiment, while maximizing the area of the adhesive member 250, it is possible to more effectively prevent the separator sheet 230 located above the second electrode 220 and the separator sheet 230 located under the second electrode 220 from being folded during the process.

In one example, the adhesive member 250 may be made of an adhesive material containing one or more components selected from the group consisting of olefins, acrylates, urethanes, esters, amides, vinyl acetates, and rubber-based polymers. However, the present disclosure is not limited thereto, and any material capable of adhering between the electrodes 210 and 220 and the separator sheet 230 can be included in the present embodiment.

Further, it may be preferable that the adhesive member 250 is uniformly applied to the tolerance d formed between the second electrode 220 and the outer surface of the electrode assembly 200. However, when the adhesive is applied to the entire surface of the tolerance d formed between the second electrode 220 and the outer surface of the electrode assembly 200, the application amount of the adhesive may be excessively large. In this case, the adhesive may flow to the outside of the separator sheet 230 and contaminate other parts, and when the secondary battery is manufactured, the function of generating power may not be smooth.

Unlike the same, if the application amount of the adhesive is excessively small, the electrodes 210 and 220 are still not fixed to the separator sheet 230 while the cell is moving, and can be separated from a prescribed position. That is, it may be desirable that the interval of the area where the adhesive is applied is not excessively wide.

Thus, according to the present embodiment, the adhesive member 250 may be preferably applied by a spot application method of applying in a dot form or a line application method of applying in a line form to the tolerance d formed between the second electrode 220 and the outer surface of the electrode assembly 200. In one example, the diameter of a dot of a spot application method or the width of a line of a line application method may be 100um or more and 800um or less. However, the diameter of the dot of the spot application method or the width of the line of the line application method is not limited to the above range, and can be adjusted to have a diameter or width of an appropriate size as needed.

Here, the spot application or line application of the adhesive member 250 may be performed by a pneumatic method or a piezoelectric method. However, the present disclosure is not limited thereto, and any method capable of applying an adhesive onto a localized area can be included in the present embodiment.

Further, the electrode assembly 200 of the present embodiment has an adhesive member 250 formed between the second electrode 220 and the outer surface of the electrode assembly 200 even if the adhesive strength between the electrodes 210 and 220 and the separator sheet 230 changes depending on the material of the separator sheet 230, thereby capable of maintaining the stiffness of the electrode assembly while preventing the electrodes 210 and 220 from being separated from a prescribed position.

More specifically, the separator sheet 230 may be an inexpensive separator having relatively low adhesive strength. In one example, the separator sheet 230 may be a CCS (ceramic coated separator) separator. However, the separator sheet 230 is not limited thereto, and any separator having adhesive strength similar to that of the CCS separator can be included in the present embodiment.

Here, when the separator sheet 230 is used, the adhesive strength between the electrodes 210 and 220 and the separator sheet 230 according to the present embodiment may be 0 N/m (0 gf/mm) or more and 0.49 N/m (0.05 gf/mm) or less. More specifically, the adhesive strength between the electrodes 210 and 220 and the separator sheet 230 may be 0 N/m (0 gf/mm) or more and 0.441 N/m (0.045 gf/mm) or less. **In** one example, the adhesive strength between the electrodes 210 and 220 and the separator sheet 230 may be 0 N/m (0 gf/mm) or more and 0.392 N/m (0.04 gf/mm) or less.

At this time, in the case of the present embodiment, even if the adhesive strength between the electrodes 210 and 220 and the separator sheet 230 is included within the above range, an adhesive member 250 is formed between the second electrode 220 and the outer surface of the electrode assembly 200, thereby capable of preventing the electrodes 210 and 220 from being separated from a prescribed position and highly maintaining the stiffness of the electrode assembly, while supplementing the adhesive strength between the electrodes 210 and 220 and the separator sheet 230. **In** addition, the present embodiment has the advantage that the separator sheet 230 with relatively low adhesive strength can be used, and thus, economic efficiency improves as costs are reduced.

Further, the present embodiment does not need to perform a laminating process through the adhesive member 250 as in a conventional case, so that the defect rate in the process caused by high heat and pressure can be reduced. Further, since the laminator can be removed, the volume of the manufacturing device can be reduced and the manufacturing process can be simplified.

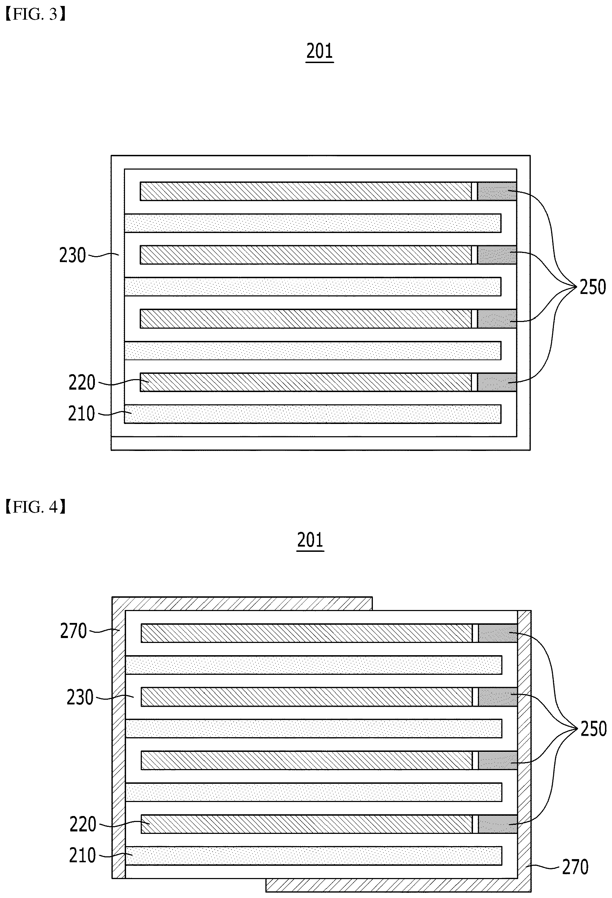

Figs. 3 and 4 are cross-sectional views of an electrode assembly according to another embodiment of the present disclosure.

Referring to Figs. 3 and 4, the electrode assemblies 201 and 202 according to another embodiment of the present disclosure may be described in the same way as the electrode assembly 200 described above, and only parts different from the electrode assembly 200 will be described below.

Referring to Fig. 3, in the electrode assembly 201 according to the present embodiment, one end of the separator sheet 230 may extend along the outer surface of the electrode assembly 201. More specifically, one end of the separator sheet 230 may wrap around the entire outer surface of the electrode assembly 201. That is, one end of the separator sheet 230 may wrap around both side surfaces and upper and lower surfaces of the electrode assembly 201.

**In** one example, as shown in Fig. 3, the end of the separator sheet 230 wrapping around the outer surface of the electrode assembly 201 may be the end of the separator sheet 230 closest to the bottom surface. **In** another example, differently from Fig. 3, the end of the separator sheet 230 wrapping around the outer surface of the electrode assembly 201 may be the end of the separator sheet 230 adjacent to the upper end of the electrode assembly 201.

Accordingly, the electrode assembly 201 according to the present embodiment can prevent the first electrode 210 from protruding to the outside by wrapping the separator sheet 230 around the outer surface of the electrode assembly 201. **In** addition, the separator sheet 230 wrapping around the outer surface of the electrode assembly 201 can further improve the stiffness of the electrode assembly 201 and effectively prevent the separator sheet 230 from being folded. Further, the present embodiment can improve cost reduction and economic efficiency from the viewpoint of requiring no separate member.

Referring to Fig. 4, the electrode assembly 202 according to the present embodiment may further include a wrapping member 270 wrapping around an outer surface of the electrode assembly 202. More specifically, the wrapping member 270 includes a first wrapping member and a second wrapping member. The first wrapping member may wrap around a portion of the outer surface of the electrode assembly 202 where the side surface opposite to the side surface wrapped by the separator sheet 230 among both side surfaces of the first electrode 210 is located. The second wrapping member may wrap around a portion of the outer surface of the electrode assembly 202 where the side surface opposite to one side surface facing one end of the second electrode 220 among both side surfaces of the adhesive member 250 is located. That is, the first wrapping member may wrap around one side surface of the electrode assembly 202, and the second wrapping member may wrap around the other side surface of the electrode assembly 202.

Further, the first wrapping member extends along one of the upper surface and the lower surface of the electrode assembly 202, and the second wrapping member may extend along the other of the upper surface and the lower surface of the electrode assembly 202. **In** one example, as shown in Fig. 4, one of the wrapping members 270 extends along one side surface of the electrode assembly 202, and may extend to the upper surface of the electrode assembly 202. Further, the other of the wrapping member 270 extends along the other side surface of the electrode assembly 202, and may extend to the lower surface of the electrode assembly 202. However, the present disclosure is not limited thereto, and the first wrapping member and the second wrapping member may be integrated with each other.

In one example, the wrapping member 270 may be a hot-melt film containing at least one component selected from the group consisting of olefins, acrylates, urethanes, esters, amides, vinyl acetates, and rubber-based polymers. In another example, the wrapping member 270 may be an adhesive tape. However, the present disclosure is not limited thereto, and any polymer material having elasticity and adhesive strength sufficient to wrap around the outer surface of the electrode assembly 202 can be included in the present embodiment.

Thereby, the electrode assembly 202 according to the present embodiment can allow the wrapping member 270 to wrap around the outer surface of the electrode assembly 201, thereby preventing the first electrode 210 from protruding to the outside. In addition, the wrapping member 270 wrapping around the outer surface of the electrode assembly 201 can further improve the stiffness of the electrode assembly 201 and effectively prevent the separator sheet 230 from being folded.

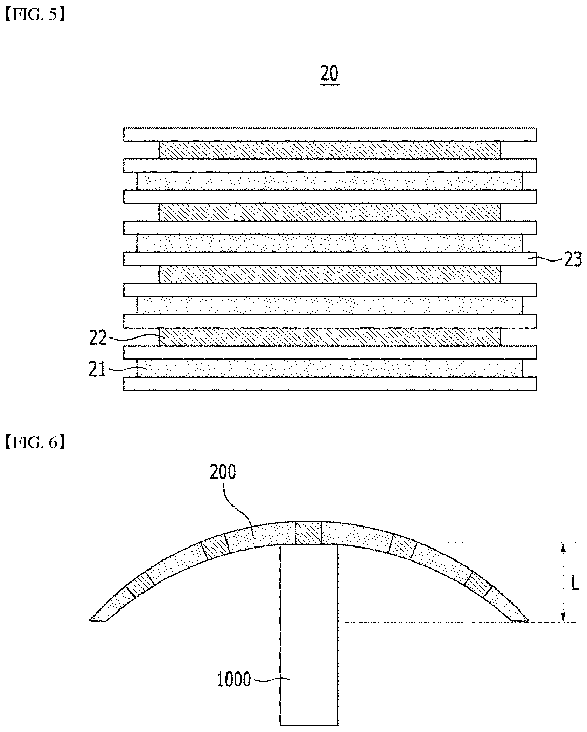

Fig. 5 is a cross-sectional view of an electrode assembly according to a comparative example.

Referring to Fig. 5, the electrode assembly 20 according to the comparative example may be configured such that the first electrodes 21 and the second electrodes 22 are alternately stacked between separators 23. In the comparative example, due to the tolerance between the separator 23 and the electrodes 21 and 22, the end of the separator 23 may have a shape that protrudes outward on the basis of the outer surface of the electrode assembly 20. Accordingly, there is a problem that an end of the separator 23 may be folded during the process, and a short circuit occurs when the separator 23 shrinks at a high temperature.

In addition, in the case of the comparative example, no separate adhesive member is formed between the separator 23 and the electrodes 21 and 22, so that in order to prevent the electrodes 210 and 220 from separating from their prescribed positions within the electrode assembly 20, a separator 23 having high adhesive strength should be used. However, in the case of the separator 23 having high adhesive strength, from the viewpoint of requiring a relatively high cost as described above, there is a problem that the economic efficiency decreases as the cost increases.

**In** comparison, referring to Figs. 1 to 4, the electrode assemblies 200, 201 and 202 according to the present embodiment have the advantage that the adhesive member 250 can be formed between the second electrode 220 and the outer surface of the electrode assembly 200, thereby preventing the electrodes 210 and 220 from being separated from their prescribed positions and highly maintaining the stiffness of the electrode assembly, while being able to use the separator sheet 230 having a relatively low adhesive strength.

A battery cell according to another embodiment of the present invention includes the electrode assembly described above. The battery cell may include a battery case (not shown) that houses the above-described electrode assemblies 200, 201 and 202 together with an electrolyte solution. At this time, the electrode assemblies 200, 201 and 202 may be made of the above-described final electrode assembly 100 and housed in the battery case (not shown).

Here, the battery case (not shown) may be a laminated sheet including a resin layer and a metal layer. More specifically, the battery case (not shown) is made of a laminated sheet, and may be composed of an outer resin layer forming the outermost shell, a barrier metal layer preventing penetration of materials, and an inner resin layer for sealing.

The present disclosure will be described by way of more specific examples, but the following examples are for illustrative purposes only, and are not intended to limit the scope of the present disclosure.

### <Comparative Example>

A cathode and an anode were alternately stacked in this order between separator sheets, and the separator sheets were folded at least twice to manufacture an electrode assembly having a zigzag shape. Here, the separator sheet is a CCS (Ceramic Coated Separator) separator. **In** addition, the size of the electrode assembly is 510 mm*97 mm.

### <Example>

An electrode assembly was manufactured in the same manner as in Comparative Example 1, except that in Comparative Example 1, the length of the cathode was less than the length of the anode, and an adhesive was applied between the cathode and the outer surface of the electrode assembly to form an adhesive member.

### <Experimental Example - Stiffness Comparison>

Fig. 6 is a diagram showing an experimental example of measuring the stiffness of an electrode assembly. As shown in Fig. 6, the center of the electrode assembly 200 was placed on a bar having a thickness of 50 mm, and then the bending degree (L) of the electrode assembly 200 was measured based on the upper end of the bar. The results are shown in Table 1 below.

**[Table 1]**

| | Comparative Example | Example |
|---|---|---|
| Bending degree of the electrode assembly (L) | 100cm | 50cm |

### <Analysis of Test Results>

Referring to Table 1, it can be confirmed that when a separate adhesive member is not formed as in Comparative Example, both ends of the electrode assembly 200 were bent relatively more on the basis of the center of the electrode assembly 200. Unlike the same, it can be confirmed that when an adhesive member coated with an adhesive was formed between the cathode and the outer surface of the electrode assembly as in Example, both ends of the electrode assembly 200 were bent relatively little on the basis of the center of the electrode assembly 200.

Accordingly, it can be confirmed that even in the case of an electrode assembly including a separator having relatively low adhesive strength, as in Example, the stiffness of the electrode assembly was improved through an adhesive member coated with an adhesive between the cathode and the outer surface of the electrode assembly.

### [Description of Reference Numerals]

100: final electrode assembly
200, 201, 202: electrode assembly
210: first electrode
220: second electrode
230: separator sheet
250: adhesive member
270: wrapping member
300: fixed member
400: electrode lead
500: lead film

## Claims

1. An electrode assembly (100, 200, 201, 202) in which electrodes (210, 220) and separator sheets (230) are alternately stacked in a Z-folding type,
wherein the electrode includes a first electrode (210) and a second electrode (220),
wherein the separator sheet (230) has a zigzag shape formed by being folded at least twice,
wherein a length of the second electrode (220) is smaller than a length of the first electrode (210), and
wherein an adhesive member (250) is located between either one of both side surfaces of the electrode assembly (100, 200, 201, 202) and the second electrode (220); and wherein
the adhesive member (250) is located between a separator sheet (230) which comes into contact with an upper surface of the second electrode (220) and a separator sheet (230) which comes into contact with a lower surface of the second electrode (220),
the adhesive member (250) is located between a side surface opposite to the side surface wrapped by the separator sheet (230) among both side surfaces of the second electrode (220), and an outer side surface of the electrode assembly (100, 200, 201, 202).

2. The electrode assembly (100, 200, 201, 202) according to claim 1, wherein:
the first electrode (210) and the second electrode (220) are aligned so that the side surface opposite to the side surface wrapped by the separator sheet (230) among both side surfaces of the first electrode (210), and the side surface wrapped by the separator sheet (230) among both side surfaces of the second electrode (220) are biased to one side surface among the outer side surfaces of the electrode assembly (100, 200, 201, 202).

3. The electrode assembly (100, 200, 201, 202) according to claim 2, wherein:
one side surface facing one end of the second electrode (220) among both side surfaces of the adhesive member (250) is spaced apart from the second electrode (220).

4. The electrode assembly (100, 200, 201, 202) according to claim 3, wherein:
the side surface opposite to the side surface facing one end of the second electrode (220) among both side surfaces of the adhesive member (250) is arranged side by side with the outer side surface of the electrode assembly (100, 200, 201, 202).

5. The electrode assembly (100, 200, 201, 202) according to claim 2, wherein:
the side surface wrapped by the separator sheet (230) among both side surfaces of the second electrode (220) comes into contact with the separator sheet (230), and
the side surface wrapped by the separator sheet (230) among both side surfaces of the first electrode (210) comes into contact with the separator sheet (230).

6. The electrode assembly (100, 200, 201, 202) according to claim 5, wherein:
a side surface opposite to the side surface wrapped the separator sheet (230) among both side surfaces of the first electrode (210) is located on the same vertical line as the outer side surface of the electrode assembly (100, 200, 201, 202).

7. The electrode assembly (100, 200, 201, 202) according to claim 1, wherein:
one end of the separator sheet (230) extends along the outer surface of the electrode assembly (100, 200, 201, 202).

8. The electrode assembly (100, 200, 201, 202) according to claim 7, wherein:
one end of the separator sheet (230) wraps around the entire outer surface of the electrode assembly (100, 200, 201, 202).

9. The electrode assembly (100, 200, 201, 202) according to claim 1, further comprising:
a wrapping member (270) that wraps the outer surface of the electrode assembly (100, 200, 201, 202).

10. The electrode assembly (100, 200, 201, 202) according to claim 9, wherein:
the wrapping member (270) includes a first wrapping member and a second wrapping member,
the first wrapping member wraps around a portion of the outer surface of the electrode assembly (100, 200, 201, 202) where the side surface opposite to the side surface wrapped by the separator sheet (230) among both side surfaces of the first electrode (210) is located, and
the second wrapping member wraps around a portion of the outer surface of the electrode assembly (100, 200, 201, 202) where the side surface opposite to one side surface facing one end of the second electrode (220) among both side surfaces of the adhesive member (250) is located.

11. The electrode assembly (100, 200, 201, 202) according to claim 10, wherein:
the first wrapping member extends along one of the upper surface and the lower surface of the electrode assembly (100, 200, 201, 202), and
the second wrapping member extends along the other of the upper surface and the lower surface of the electrode assembly (100, 200, 201, 202).

12. The electrode assembly (100, 200, 201, 202) according to claim 9, wherein:
the wrapping member (270) is made of at least one of a hot-melt film and an adhesive tape.

13. A battery cell comprising the electrode assembly (100, 200, 201, 202) as set forth in claim 1.

## Patentansprüche

1. Elektrodenanordnung (100, 200, 201, 202), bei der Elektroden (210, 220) und Zwischenblätter (230) abwechselnd in einem Z-Faltungstyp gestapelt sind,
• wobei die Elektrode eine erste Elektrode (210) und eine zweite Elektrode (220) beinhaltet,
• wobei das Zwischenblatt (230) eine Zickzackform aufweist, die durch mindestens zweimaliges Falten gebildet wird,
• wobei eine Länge der zweiten Elektrode (220) kleiner ist als eine Länge der ersten Elektrode (210), und
• wobei sich ein Klebeelement (250) zwischen einer von beiden Seitenoberflächen der Elektrodenanordnung (100, 200, 201, 202) und der zweiten Elektrode (220) befindet; und wobei
• sich das Klebeelement (250) zwischen einem Zwischenblatt (230), das mit einer oberen Oberfläche der zweiten Elektrode (220) in Kontakt kommt, und einem Zwischenblatt (230), das mit einer unteren Oberfläche der zweiten Elektrode (220) in Kontakt kommt, befindet,
• sich das Klebeelement (250) zwischen einer Seitenoberfläche gegenüber der durch das Zwischenblatt (230) umwickelten Seitenoberfläche unter den beiden Seitenoberflächen der zweiten Elektrode (220) und einer äußeren Seitenoberfläche der Elektrodenanordnung (100, 200, 201, 202) befindet.

2. Elektrodenanordnung (100, 200, 201, 202) nach Anspruch 1, wobei:
die erste Elektrode (210) und die zweite Elektrode (220) ausgerichtet sind, sodass die Seitenoberfläche gegenüber der durch das Zwischenblatt (230) umhüllten Seitenoberfläche unter den beiden Seitenflächen der ersten Elektrode (210), und die durch das Zwischenblatt (230) umwickelte Seitenoberfläche unter den beiden Seitenoberflächen der zweiten Elektrode (220) zu einer Seitenoberfläche unter den äußeren Seitenoberflächen der Elektrodenanordnung (100, 200, 201, 202) vorgespannt sind.

3. Elektrodenanordnung (100, 200, 201, 202) nach Anspruch 2, wobei:
eine Seitenoberfläche, die einem Ende der zweiten Elektrode (220) zugewandt ist, unter den beiden Seitenoberflächen des Klebeelements (250) von der zweiten Elektrode (220) beabstandet ist.

4. Elektrodenanordnung (100, 200, 201, 202) nach Anspruch 3, wobei:
die Seitenoberfläche gegenüber der einem Ende der zweiten Elektrode (220) zugewandten Seitenoberfläche unter den beiden Seitenoberflächen des Klebeelements (250) Seite an Seite mit der äußeren Seitenoberfläche der Elektrodenanordnung (100, 200, 201, 202) angeordnet ist.

5. Elektrodenanordnung (100, 200, 201, 202) nach Anspruch 2, wobei:
• die durch das Zwischenblatt (230) umwickelte Seitenoberfläche unter den beiden Seitenoberflächen der zweiten Elektrode (220) mit dem Zwischenblatt (230) in Kontakt kommt, und
• die durch das Zwischenblatt (230) umwickelte Seitenoberfläche unter den beiden Seitenoberflächen der ersten Elektrode (210) mit dem Zwischenblatt (230) in Kontakt kommt.
•

6. Elektrodenanordnung (100, 200, 201, 202) nach Anspruch 5, wobei:
sich eine Seitenoberfläche gegenüber der durch das Zwischenblatt (230) umwickelten Seitenoberfläche unter den beiden Seitenoberflächen der ersten Elektrode (210) auf derselben vertikalen Linie wie die äußere Seitenoberfläche der Elektrodenanordnung (100, 200, 201, 202) befindet.

7. Elektrodenanordnung (100, 200, 201, 202) nach Anspruch 1, wobei:
ein Ende des Zwischenblatts (230) sich entlang der Außenoberfläche der Elektrodenanordnung (100, 200, 201, 202) erstreckt.

8. Elektrodenanordnung (100, 200, 201, 202) nach Anspruch 7, wobei:
ein Ende des Zwischenblatts (230) sich um die gesamte Außenoberfläche der Elektrodenanordnung (100, 200, 201, 202) herumwickelt.

9. Elektrodenanordnung (100, 200, 201, 202) nach Anspruch 1, weiter umfassend:
ein Wickelelement (270), das sich um die Außenoberfläche der Elektrodenanordnung (100, 200, 201, 202) herumwickelt.

10. Elektrodenanordnung (100, 200, 201, 202) nach Anspruch 9, wobei:
• das Wickelelement (270) ein erstes Wickelelement und ein zweites Wickelelement beinhaltet,
• das erste Wickelelement sich um einen Abschnitt der Außenoberfläche der Elektrodenanordnung (100, 200, 201, 202) herumwickelt, an dem sich die Seitenoberfläche gegenüber der durch das Zwischenblatt (230) umwickelten Seitenoberfläche unter den beiden Seitenoberflächen der ersten Elektrode (210) befindet, und
• das zweite Wickelelement sich um einen Abschnitt der Außenoberfläche der Elektrodenanordnung (100, 200, 201, 202) herumwickelt, an dem sich die Seitenfläche gegenüber der einen Seitenoberfläche, die einem Ende der zweiten Elektrode (220) unter den beiden Seitenoberflächen des Klebeelements (250) zugewandt ist, befindet.

11. Elektrodenanordnung (100, 200, 201, 202) nach Anspruch 10, wobei:
• das erste Wickelelement sich entlang einer von der oberen Oberfläche und der unteren Oberfläche der Elektrodenanordnung (100, 200, 201, 202) erstreckt, und
• das zweite Wickelelement sich entlang der anderen von der oberen Oberfläche und der unteren Oberfläche der Elektrodenanordnung (100, 200, 201, 202) erstreckt.

12. Elektrodenanordnung (100, 200, 201, 202) nach Anspruch 9, wobei:
das Wickelelement (270) aus mindestens einem von einer Schmelzklebefolie und einem Klebeband hergestellt ist.

13. Batteriezelle, umfassend die Elektrodenanordnung (100, 200, 201, 202) nach Anspruch 1.

## Revendications

1. Ensemble d'électrodes (100, 200, 201, 202) dans lequel des électrodes (210, 220) et des feuilles de séparateur (230) sont empilées alternativement selon un type de pliage en Z,
dans lequel l'électrode comprend une première électrode (210) et une seconde électrode (220),
dans lequel la feuille de séparateur (230) a une forme en zigzag formée en étant pliée au moins deux fois,
dans lequel une longueur de la seconde électrode (220) est inférieure à une longueur de la première électrode (210), et
dans lequel un élément adhésif (250) est situé entre l'une ou l'autre des deux surfaces latérales de l'ensemble d'électrodes (100, 200, 201, 202) et la seconde électrode (220) ;
et dans lequel :
l'élément adhésif (250) est situé entre une feuille de séparateur (230) qui vient en contact avec une surface supérieure de la seconde électrode (220) et une feuille de séparateur (230) qui vient en contact avec une surface inférieure de la seconde électrode (220),
l'élément adhésif (250) est situé entre une surface latérale opposée à la surface latérale enveloppée par la feuille de séparateur (230) parmi les deux surfaces latérales de la seconde électrode (220), et une surface latérale externe de l'ensemble d'électrodes (100, 200, 201, 202).

2. Ensemble d'électrodes (100, 200, 201, 202) selon la revendication 1, dans lequel :
la première électrode (210) et la seconde électrode (220) sont alignées de sorte que la surface latérale opposée à la surface latérale enveloppée par la feuille de séparateur (230) parmi les deux surfaces latérales de la première électrode (210), et la surface latérale enveloppée par la feuille de séparateur (230) parmi les deux surfaces latérales de la seconde électrode (220) soient décalées vers une surface latérale parmi les surfaces latérales externes de l'ensemble d'électrodes (100, 200, 201, 202).

3. Ensemble d'électrodes (100, 200, 201, 202) selon la revendication 2, dans lequel :
une surface latérale faisant face à une extrémité de la seconde électrode (220) parmi les deux surfaces latérales de l'élément adhésif (250) est espacée de la seconde électrode (220).

4. Ensemble d'électrodes (100, 200, 201, 202) selon la revendication 3, dans lequel :
la surface latérale opposée à la surface latérale faisant face à une extrémité de la seconde électrode (220) parmi les deux surfaces latérales de l'élément adhésif (250) est disposée côte à côte avec la surface latérale externe de l'ensemble d'électrodes (100, 200, 201, 202).

5. Ensemble d'électrodes (100, 200, 201, 202) selon la revendication 2, dans lequel :
la surface latérale enveloppée par la feuille de séparateur (230) parmi les deux surfaces latérales de la seconde électrode (220) vient en contact avec la feuille de séparateur (230), et
la surface latérale enveloppée par la feuille de séparateur (230) parmi les deux surfaces latérales de la première électrode (210) vient en contact avec la feuille de séparateur (230).

6. Ensemble d'électrodes (100, 200, 201, 202) selon la revendication 5, dans lequel :
une surface latérale opposée à la surface latérale enveloppée par la feuille de séparateur (230) parmi les deux surfaces latérales de la première électrode (210) est située sur la même ligne verticale que la surface latérale externe de l'ensemble d'électrodes (100, 200, 201, 202).

7. Ensemble d'électrodes (100, 200, 201, 202) selon la revendication 1, dans lequel :
une extrémité de la feuille de séparateur (230) s'étend le long de la surface externe de l'ensemble d'électrodes (100, 200, 201, 202).

8. Ensemble d'électrodes (100, 200, 201, 202) selon la revendication 7, dans lequel :
une extrémité de la feuille de séparateur (230) s'enveloppe autour de la totalité de la surface externe de l'ensemble d'électrodes (100, 200, 201, 202).

9. Ensemble d'électrodes (100, 200, 201, 202) selon la revendication 1, comprenant en outre :
un élément d'enveloppement (270) qui enveloppe la surface externe de l'ensemble d'électrodes (100, 200, 201, 202).

10. Ensemble d'électrodes (100, 200, 201, 202) selon la revendication 9, dans lequel :
l'élément d'enveloppement (270) comprend un premier élément d'enveloppement et un second élément d'enveloppement,
le premier élément d'enveloppement s'enveloppe autour d'une partie de la surface externe de l'ensemble d'électrodes (100, 200, 201, 202) où se trouve la surface latérale opposée à la surface latérale enveloppée par la feuille de séparateur (230) parmi les deux surfaces latérales de la première électrode (210), et
le second élément d'enveloppement s'enveloppe autour d'une partie de la surface externe de l'ensemble d'électrodes (100, 200, 201, 202) où se trouve la surface latérale opposée à une surface latérale faisant face à une extrémité de la seconde électrode (220) parmi les deux surfaces latérales de l'élément adhésif (250).

11. Ensemble d'électrodes (100, 200, 201, 202) selon la revendication 10, dans lequel :
le premier élément d'enveloppement s'étend le long de l'une parmi la surface supérieure et la surface inférieure de l'ensemble d'électrodes (100, 200, 201, 202), et le second élément d'enveloppement s'étend le long de l'autre parmi la surface supérieure et la surface inférieure de l'ensemble d'électrodes (100, 200, 201, 202).

12. Ensemble d'électrodes (100, 200, 201, 202) selon la revendication 9, dans lequel :
l'élément d'enveloppement (270) est constitué d'au moins l'un parmi un film thermofusible et un ruban adhésif.

13. Élément de batterie comprenant l'ensemble d'électrodes (100, 200, 201, 202) selon la revendication 1.
